# EUROPEAN PATENT SPECIFICATION

(11) **EP 1 283 741 B1**
(45) Date of publication and mention of the grant of the patent: **01.04.2009**
(21) Application number: 01933487.9
(22) Date of filing: 15.05.2001
(51) Int. Cl.: B01D 53/26, B01D 53/06

(54) **COMPRESSOR UNIT, PROVIDED WITH AN ADSORPTION DRYER AND ADSORPTION DRYER THEREFOR**
VERDICHTERANLAGE MIT ADSORBTIONSTROCKNER
ENSEMBLE COMPRESSEUR COMPORTANT UN DESHYDRATEUR PAR ADSORPTION ET DESHYDRATEUR PAR ADSORPTION

(30) Priority: 17.05.2000 BE 200000331
(43) Date of publication of application: 19.02.2003
(73) Proprietor: ATLAS COPCO AIRPOWER N.V., 2610 Wilrijk (BE)
(72) Inventor: VERTRIEST, Danny, B-2550 Kontich (BE)
(74) Representative: Donné, Eddy
(86) International application number: PCT/BE2001/000085
(87) International publication number: WO 2001/087463

(56) References cited:
- EP-A- 0 566 180
- EP-A- 0 799 635
- EP-A- 0 856 707
- DE-A- 3 203 152
- US-A- 3 205 638
- US-A- 3 807 053

## Description

This invention relates to an adsorption dryer for a compressor unit comprising at least one compressor element, the outlet of which, by means of an outlet conduit, through a cooler and a water separator, connects to the adsorption dryer of the type comprising a vessel, a rotor mounted therein in a rotatable manner, and means for rotating the rotor, whereby at each of the extremities of the vessel, in front of an extremity of the rotor, at least two separated compartments are formed, respectively provided with an inlet or outlet for the supply, discharge, respectively, of gas and whereby the portion of the rotor situated between a compartment on the one extremity and a compartment on the other extremity of the vessel forms a drying chamber which is filled with a regeneratable drying agent and the portion of the rotor situated between the other compartment on the first-mentioned extremity and the other compartment on the other extremity of the vessel forms a regeneration chamber which is filled with regeneratable drying agent.

Such compressor units provided with an adsorption dryer are described, for example, in the patent documents US-A-5.385.603 and GB-A-1.349.733.

The compressor comprises a compressor element which, by means of a main conduit, through a cooler and a separator of the condensed water, is connected to the compartment at the inlet of the drying chamber, whereas a branch of the main conduit situated upstream of the cooler connects to the compartment at the inlet of the regeneration chamber and a return conduit connects the compartment at the outlet of the regeneration chamber to the main conduit at the height of an ejector.

During the drying of gas in the drying chamber, the drying agent, which, in a previous cycle, has been saturated with moisture, is regenerated in the regeneration chamber by directing a portion, for example, 40 %, of the compressed air of the compressor element therethrough and, after cooling down and separating the condensed water, by feeding it, through the return conduit and the ejector, back to the gas which still has to be dried.

Due to the necessity of a secondary conduit, a return conduit and a mixer, such as the ejector, for mixing moisture-laden gas from the regeneration chamber again with compressed air from the compressor element, these known compressor units are provided with an adsorption dryer which has a rather complicated construction and is expensive.

Moreover, in critical circumstances, the regeneration is insufficient, to wit when the load on the compressor element is low and the temperature for the regeneration is not sufficiently high.

The invention has as an aim to remedy these disadvantages and to provide a compressor unit, provided with an adsorption dryer, which has a more simple construction and whereby also with a low load on the compressor element an efficient regeneration of the drying agent is possible.

According to the invention, this aim is realized in that the portion of the rotor which forms the regeneration chamber is situate in the outlet conduit between the compressor element and the cooler and that between said compartments on the one extremity of the vessel and between said compartments on the other extremity, a corresponding separation compartment is formed which separates the compartments from each other and that pressure-reducing means are provided for removing gas from these separation compartments, whereby the pressure-reducing means can remove gas from the separation compartments until the pressure in these separation compartments is lower than the pressure in the compartment which is situated at an extremity of the drying chamber and which is provided with the outlet for gas.

Due to pressure losses in the unit, the pressure in this compartment is somewhat lower than the outlet pressure of the compressor element.

Thus, the entire flow rate of compressed gas flows through the regeneration chamber and is cooled by the cooler pertaining to the compressor unit and is freed of condensation by the water separator before being dried, which is possible due to the special construction of the adsorption dryer. No additional cooler is necessary for removing the moisture from the gas used for regeneration.

It is known, amongst others, from US-A-3.205.638 and FR-A-2.380.063, to direct the entire flow rate of compressed gas through the regeneration chamber of an adsorption dryer, but the adsorption dryer is of another type, to wit, without a rotor, but with fixed, completely separated chambers which, by means of selector valves, connect to the outlet conduit and whereby the alternation of drying and regenerating is obtained by altering the state of these selector valves.

With the known adsorption dryers having a rotor, this was not possible, in consideration of the fact that there are always leaks between the rotor and the compartments at the extremity of the vessel. As a result thereof, at one extremity of the vessel hot gas at high pressure, originating from the compressor element, will leak towards the compartment being at a lower pressure which connects to the drying chamber, whereas at the other extremity of the vessel, the still warm and moisture-laden gas leaving the regeneration chamber will leak towards the compartment which connects to the outlet of the drying chamber, and the cold, dried gas will warm up and become humid again.

These problems are solved by the invention.

The two compartments at the extremities can be in mutual connection, for example, by at least one portion of the rotor which is situated between the portions forming the drying chamber and the regeneration chamber.

Said means can comprise an ejector in the outlet conduit which, by means of a suction conduit, is in connection with a compartment.

The invention relates to an adsorption dryer as claimed in the appended claim 1.

With the intention of better showing the characteristics of the invention, hereafter, as an example without any limitative character, a preferred form of embodiment of an adsorption dryer and of a compressor unit provided with such adsorption dryer according to the invention is described, with reference to the accompanying drawings, wherein:
figure 1 schematically represents a compressor unit provided with an adsorption dryer according to the invention;
figure 2 represents a cross-section according to line II-II in figure 1.

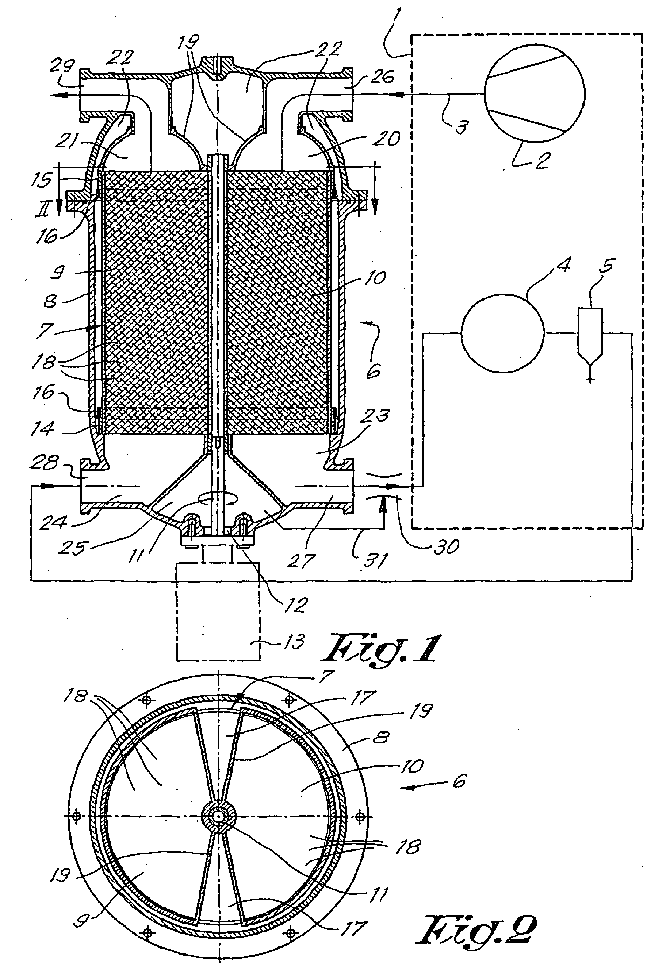

The compressor unit schematically represented in figure 1 consists of, on one hand, a compressor 1 which substantially comprises a compressor element 2, and in the outlet conduit 3 thereof a cooler 4, followed by a water separator 5, and, on the other hand, an adsorption dryer 6 with a rotor 7 which is mounted in an upright vessel 8 in a continuously rotatable manner and in which a drying chamber 9 and a regeneration chamber 10 are formed.

The rotor 7 is fixed to a vertical shaft 11 which is beared in a bearing 12 in the lowermost extremity of the vessel 8 and, usually, will be driven continuously by a motor 13 forming driving means for the rotor 7.

The rotor 7 consists of a bundle of vertical tubes.

On the extremities of the rotor 7, these tubes are held together by a ring 14 or 15.

By means of the lowermost ring 14, the rotor 7 rests upon an edge of the vessel 8. On the lowermost ring 14 as well as on the uppermost ring 15, a rubber sealing 16 is fixed which drags against the vessel wall.

The drying chamber 9 and the regeneration chamber 10 are formed by parts of the rotor 7 which are each other's mirror image and which together surround the shaft 11.

Said tubes forming the drying chamber 9 as well as the regeneration chamber 10 are filled with a regeneratable drying agent 18, such as silica gel.

The extremities of the vessel 8, situated in front of the extremities of the rotor 7, are separated into compartments by partitions 19, to wit two compartments 20 and 21 at the top with therein between a separation compartment 22 and two compartments 23 and 24 at the bottom with therein between a separation compartment 25.

The drying chamber 9 is the part of the rotor 7 which is situated between compartments 21 and 24, whereas the regeneration chamber 10 is the part of the rotor 7 which extends between compartments 20 and 23.

Due to the presence of the separation compartments 21 and 25, the drying chamber 9 and the regeneration chamber 10 have a horizontal cross-section which is smaller than half a circle and, for example, covers a circle segment of approximately 160°.

The separation compartments 21 and 25 are in connection with each other by means of portions 17 of the rotor 7 which are situated between the formed drying chamber 9 and regeneration chamber 10.

The compartment 20 connects to the uppermost extremity or the inlet of the regeneration chamber 10 and is provided with an inlet 26 which, by outlet conduit 3, is in direct connection with the outlet of the compressor element 2, whereas the compartment 23 connects to the lowermost extremity of this regeneration chamber 10 and is provided with an outlet 27 which, by outlet conduit 3, is connected to the inlet of cooler 4.

In an analogous manner, the lowermost compartment 24 connects to the lowermost extremity or the inlet of the drying chamber 9 and is it provided with an inlet 28 which, by outlet conduit 3, connects to the outlet of the water separator 5, whereas the uppermost compartment 21 connects to the uppermost extremity or the outlet of the drying chamber 9 and is provided with an outlet 29.

Means are provided for removing gas from these separation compartments 22 and 25 and, thus, also from the portions 17 of the rotor 7 and for reducing the pressure therein until it drops below the pressure of the dried gas in compartment 21.

In the represented example, these means are formed by an ejector 30 which is positioned between the outlet 27 and the cooler 4 in the outlet conduit 3, and the suction conduit 31 of which, which conduit gives out into its narrowed part, connects to compartment 25.

In a variant, these means can be formed by a suction pump or a fan which suck off gas from one of the compartments 22 and 25 or the portions 17 of the rotor 7.

The functioning of the compressor unit described in the aforegoing is as follows:

The entire flow rate of warm, compressed gas supplied by compressor element 2 flows, through outlet conduit 3, inlet 26 and compartment 20 into the regeneration chamber 10, where, anyhow, if the compressor unit already has been operating for a time, moist drying agent 18 is situated.

In the regeneration chamber 10, this warm gas takes up the moisture as a result of which this drying agent 18 is regenerated. The humid warm gas flows through compartment 23, outlet 27 and, therefore, through ejector 30, towards the cooler 4 where, as a result of cooling, the moisture is condensed.

Due to this flow, a negative pressure will be created in the ejector 30, such that, by means of suction conduit 31, gas is sucked from the separation compartment 25 and, by means of the portions 17 of the rotor 7, also from the separation compartment 22 at the top.

As a consequence, warm gas under pressure, which inevitably leaks between compartments 20 and 23, on one hand, and the rotor 7, on the other hand, will not reach compartments 21 and 24 and therefore will not be mixed with the cooled and, by means of the water separator, desiccated gas.

In the water separator 5, the condensed water and the cold, desiccated gas are brought through inlet 28 and compartment 24 into the drying chamber 9, where it is dried further, after which, through compartment 21 and outlet 29, it leaves the adsorption dryer 6 cold and in dry condition in order to be used.

Cold gas which possibly may leak from compartments 21 and 24 will end up in the separation compartment 22, 25, respectively, and therefore will be sucked off through separation compartment 25 by means of the ejector 30, such that no leaking cold gas reaches the compartments 20 and 23 and can not cool down the warm gas in this latter.

The continuous rotational speed of the rotor 7 is chosen such that, when the drying agent 18 in a tube is saturated with moisture, this tube stops with forming part of the drying chamber 9. After a small further rotation of the rotor 7, the same tube will form a part of the regeneration chamber 10 and at the time that this tube stops forming a part of this regeneration chamber 10, the drying agent 18 in this tube is regenerated, such that this drying agent can be re-used for drying as soon as the tube again forms a part of the drying chamber 9.

Before cooling moisture-laden gas from the regeneration chamber 10, the cooler is used by the compressor 1, such that the compressor unit comprises only one cooler and is of a simple construction.

Also with a low load, the gas is dried in an optimum manner.

In the adsorption dryer, more than one drying chamber 9 and/or regeneration chamber 10 can be formed, whereby the different drying chambers 9, regeneration chambers 10, respectively, give out at an extremity of the vessel 8 to separate compartments or to one common compartment.

The compressor may be a multi-stage compressor and, thus, comprise two or even more compressor elements which are positioned one after the other. In this case, the compressor element which is connected to the adsorption dryer 6, of course is the last or high-pressure compressor element.

The invention is in no way limited to the forms of embodiment described in the aforegoing, on the contrary, such compressor unit and adsorption dryer therefor may be realized in different variants without leaving the scope of the invention.

## Claims

1. Adsorption dryer (6) comprising a vessel (8), a rotor (7) mounted therein in a rotatable manner, and means (13) for rotating the rotor (7), whereby at each of the extremities of the vessel (8), in front of an extremity of the rotor (7), at least two separated compartments (20,21;23,24) are formed, respectively provided with an inlet or outlet (28,26;29,27) for the supply, discharge, respectively, of gas, and the portion of the rotor (7) situated between a compartment (24) on the one extremity and a compartment (21) on the other extremity of the vessel (8) forms a drying chamber (9) which is filled with a regeneratable drying agent (18), and the portion of the rotor (7), situated between the other compartment (20) on the first-mentioned extremity and the other compartment (24) on the other extremity of the vessel, forms a regeneration chamber (10) which is filled with regeneratable drying agent (18), **characterized in that** between said compartments (20,21) on the one extremity of the vessel (8) and between said compartments (23,24) on the other extremity of the vessel (8), a corresponding separation compartment (22,25) is formed which separates the compartments (20 and 21; 23 and 24) from each other and that pressure-reducing means (30,31) are provided for removing gas from these separation compartments (22,25).

2. Adsorption dryer (6) according to claim 1, **characterized in that** the separation compartments (22,25) on both extremities are in mutual connection.

3. Adsorption dryer (6) according to claim 2, **characterized in that** the separation compartments (22,25) are in mutual connection by means of at least one portion (17) of the rotor (7) which is situated in between the portions forming the drying chamber (9) and the regeneration chamber (10).

4. Adsorption dryer (6) according to any of the claims 1 to 3, **characterized in that** it comprises only one drying chamber (9) and one regeneration chamber (10).

5. Adsorption dryer (6) according to claims 3 and 4, **characterized in that** the drying chamber (9) and the regeneration chamber (10) have a cross-section perpendicular to their longitudinal direction having the shape of a circle sector of approximately 160°.

6. Adsorption dryer (6) according to any of the claims 1 to 5, **characterized in that** the means for removing gas from the separation compartments comprise a suction conduit (31) which is connected to an ejector (30).

7. Compressor unit comprising at least one compressor element (2), the outlet of which, by means of an outlet conduit (3), connects, over a cooler (4) and a water separator (5), to an adsorption dryer (6) according to any of the preceding claims, **characterized in that** the portion of the rotor (7) which forms the regeneration chamber (10) is situated in the outlet conduit (3) between the compressor element (2) and the cooler (4) and that, the pressure-reducing means (30,31) can remove gas from the separation compartments (22,25) until the pressure in the separation compartments (22,25) is lower than the pressure in the compartment (21) which is situated at one extremity of the drying chamber (9) and which is provided with the outlet(29) for gas.

8. Compressor unit according to claim 7, **characterized in that** the separation compartments (22,25) at both extremities are in mutual connection.

9. Compressor unit according to claim 8, **characterized in that** the separation compartments (22,25) on both extremities are in mutual connection by means of at least one portion (17) of the rotor which is situated between the portions forming the drying chamber (9) and the regeneration chamber (10).

10. Compressor unit according to any of the claims 7 to 9, **characterized in that** the means for removing gas from the separation compartments comprise an ejector (30) in the outlet conduit (3) which, by.a suction conduit (31), is in connection with a compartment (25).

11. Compressor unit according to claim 10, **characterized in that** the ejector (30) is situated between the adsorption dryer (6) and the cooler (4).

## Patentansprüche

1. Adsorptionstrockner (6), der einen Behälter (8) umfasst, einen darin drehbar montierten Rotor (7), und Mittel (13) zum Drehen des Rotors (7), wobei an jedem der Enden des Behälters (8), vor einem Ende des Rotors (7), mindestens zwei getrennte Räume (20,21;23,24) ausgebildet sind, die jeweils mit einem Einlass oder Auslass (28,26;29,27) zur Zufuhr beziehungsweise Abfuhr von Gas versehen sind, und wobei der zwischen einem Raum (24) an dem einen Ende und einem Raum (21) an dem anderen Ende des Behälters (8) befindliche Teil des Rotors (7) eine Trockenkammer (9) bildet, die mit einem regenerierbaren Trockenmittel (18) gefüllt ist, und der zwichen dem anderen Raum (20) an dem erstgenannten Ende und dem anderen Raum (24) an dem anderen Ende des Behälters befindliche Teil des Rotors (7) eine Regenerationskammer (10) bildet, die mit regenerierbarem Trockenmittel (18) gefüllt ist, **dadurch gekennzeichnet, dass** der Teil des Rotors (7), der die Regenerationskammer (10) bildet, sich in der Auslassleitung (3) zwischen dem Verdichterelement (2) und dem Kühler (4) befindet und dass zwischen den Räumen (20,21) an dem einen Ende des Behälters (8) und zwischen den Räumen (23,24) an dem anderen Ende des Behälters (8) ein entsprechender Abscheidungsraum (22,25) gebildet ist, der die Räume (20 und 21; 23 und 24) voneinander trennt, und dass Druckminderungsmittel (30,31) zum Entfernen von Gas aus diesen Abscheidungsräumen (22,25) vorgesehen sind.

2. Adsorptionstrockner (6) nach Anspruch 1, **dadurch gekennzeichnet, dass** die Abscheidungsräume (22,25) an beiden Enden miteinander in Verbindung stehen.

3. Adsorptionstrockner (6) nach Anspruch 2, **dadurch gekennzeichnet, dass** die Abscheidungsräume (22,25) mittels mindestens eines Teils (17) des Rotors (7), der sich zwischen den Teilen befindet, die die Trockenkammer (9) und die Regenerationskammer (10) bilden, miteinander in Verbindung stehen.

4. Adsorptionstrockner (6) nach einem der Ansprüche 1 bis 3, **dadurch gekennzeichnet, dass** er nur eine Trockenkammer (9) und eine Regenerationskammer (10) umfasst.

5. Adsorptionstrockner (6) nach den Ansprüchen 3 und 4, **dadurch gekennzeichnet, dass** die Trockenkammer (9) und die Regenerationskammer (10) einen Querschnitt senkrecht zu ihrer Längsrichtung aufweisen, der die Form eines Kreisabschnitts von etwa 160° hat.

6. Adsorptionstrockner (6) nach einem der Ansprüche 1 bis 5, **dadurch gekennzeichnet, dass** die Mittel zum Entfernen von Gas aus den Abscheidungsräumen eine Saugleitung (31) umfassen, die mit einem Ejektor (30) verbunden ist.

7. Verdichtereinheit, welche mindestens ein Verdichterelement (2) umfasst, dessen Auslass mittels einer Auslassleitung (3) über einen Kühler (4) und einen Wasserabscheider (5) an einen Adsorptionstrockner (6) nach einem der vorgenannten Ansprüche anschließt, **dadurch gekennzeichnet, dass** der Teil des Rotors (7), der die Regenerationskammer (10) bildet, sich in der Auslassleitung (3) zwischen dem Verdichterelement (2) und dem Kühler (4) befindet und dass die Druckminderungsmittel (30,31) Gas aus den Abscheidungsräumen (22,25) entfernen können, bis der Druck in den Abscheidungsräumen (22,25) niedriger als der Druck in dem Raum (21) ist, der sich an einem Ende der Trockenkammer (9) befindet und der mit dem Auslass (29) für Gas versehen ist.

8. Verdichtereinheit nach Anspruch 7, **dadurch gekennzeichnet, dass** die Abscheidungsräume (22,25) an beiden Enden miteinander in Verbindung stehen.

9. Verdichtereinheit nach Anspruch 8, **dadurch gekennzeichnet, dass** die Abscheidungsräume (22,25) an beiden Enden mittels mindestens eines Teils (17) des Rotors miteinander in Verbindung stehen, der sich zwischen den Teilen befindet, die die Trockenkammer (9) und die Regenerationskammer (10) bilden.

10. Verdichtereinheit nach einem der Ansprüche 7 bis 9, **dadurch gekennzeichnet, dass** die Mittel zum Entfernen von Gas aus den Abscheidungsräumen einen Ejektor (30) in der Auslassleitung (3) umfassen, der mittels einer Saugleitung (31) mit einem Raum (25) in Verbindung steht.

11. Verdichtereinheit nach Anspruch 10, **dadurch gekennzeichnet, dass** der Ejektor (30) sich zwischen dem Adsorptionstrockner (6) und dem Kühler (4) befindet.

## Revendications

1. Sécheur à adsorption (6) comprenant une cuve (8), un rotor (7) qui y est monté de manière rotative, et un moyen (13) pour faire tourner le rotor (7), par lequel, à chacune des extrémités de la cuve (8), enface d'une extrémité du rotor (7), au moins deux compartiments séparés (20, 21 ; 23, 24) sont formés, en étant respectivement muni d'une entrée ou d'une sortie (28, 26 ; 29, 27) pour l'alimentation, la décharge, respectivement, d'un gaz, et la portion du rotor (7) située entre un compartiment (24) à une extrémité et un compartiment (21) à l'autre extrémité de la cuve (8) forme une chambre de séchage (9) qui est remplie avec un agent dessiccateur régénérable (18), et la portion du rotor (7), située entre l'autre compartiment (20) à l'extrémité mentionnée en premier lieu et l'autre compartiment (24) à l'autre extrémité de la cuve, forme une chambre de régénération (10) qui est remplie avec un agent dessiccateur régénérable (18), **caractérisé en ce que,** entre lesdits compartiments (20, 21) à l'une extrémité de la cuve (8) et entre lesdits compartiments (23, 24) à l'autre extrémité de la cuve (8), un compartiment de séparation correspondant (22, 25) est formé qui sépare les compartiments (20 et 21 ; 23 et 24) l'un de l'autre, et **en ce que** des moyens de réduction de la pression (30, 31) sont prévus pour éliminer le gaz de ces compartiments de séparation (22, 25).

2. Sécheur à adsorption (6) selon la revendication 1, **caractérisé en ce que** les compartiments de séparation (22, 25) aux deux extrémités sont en connexion mutuelle.

3. Sécheur à adsorption (6) selon la revendication 2, **caractérisé en ce que** les compartiments de séparation (22, 25) aux deux extrémités sont en connexion mutuelle au moyen d'au moins une portion (17) du rotor (7) qui est située entre les portions formant la chambre de séchage (9) et la chambre de régénération (10).

4. Sécheur à adsorption (6) selon l'une quelconque des revendications 1 à 3, **caractérisé en ce qu'**il comprend seulement une chambre de séchage (9) et une chambre de régénération (10).

5. Sécheur à adsorption (6) selon les revendications 3 et 4, **caractérisé en ce que** la section transversale de la chambre de séchage (9) et la chambre de régénération (10), perpendiculaire à la direction longitudinale, possède la configuration d'un secteur de cercle d'approximativement 160°.

6. Sécheur à adsorption (6) selon l'une quelconque des revendications 1 à 5, **caractérisé en ce que** les moyens pour éliminer le gaz des compartiments de séparation comprennent un conduit d'aspiration (31) qui est connecté à un éjecteur (30).

7. Unité de compresseur comprenant au moins un élément de compresseur (2) dont la sortie, au moyen d'un conduit de sortie (3), est raccordée, via un refroidisseur (4) et un séparateur d'eau (5), à un sécheur à adsorption (6) selon l'une quelconque des revendications précédentes, **caractérisée en ce que** la portion du rotor (7) qui forme la chambre de régénération (10) est située dans le conduit de sortie (3) entre l'élément de compresseur (2) et le refroidisseur (4), et **en ce que** les moyens de réduction de pression (30, 31) peuvent éliminer le gaz des compartiments de séparation (22, 25) jusqu'à ce que la pression dans les compartiments de séparation (22, 25) soit inférieure à la pression dans le compartiment (21) qui est situé à une extrémité de la chambre de séchage (9) et qui est muni de la sortie (29) pour le gaz.

8. Unité de compresseur selon la revendication 7, **caractérisée en ce que** les compartiments de séparation (22, 25) aux deux extrémités sont en connexion mutuelle.

9. Unité de compresseur selon la revendication 8, **caractérisée en ce que** les compartiments de séparation (22, 25) aux deux extrémités sont en connexion mutuelle au moyen d'au moins une portion (17) du rotor qui est située entre les portions formant la chambre de séchage (9) et la chambre de régénération (10).

10. Unité de compresseur selon l'une quelconque des revendications 7 à 9, **caractérisée en ce que** les moyens pour éliminer le gaz des compartiments de séparation comprennent un éjecteur (30) dans le conduit de sortie (3) qui, via un conduit aspiration (31), est raccordé à un compartiment (25).

11. Unité de compresseur selon la revendication 10, **caractérisée en ce que** l'éjecteur (30) est situé entre le sécheur à adsorption (6) et le refroidisseur (4).
